# EUROPÄISCHE PATENTSCHRIFT

(11) **EP 3 657 054 B1**
(45) Veröffentlichungstag und Bekanntmachung des Hinweises auf die Patenterteilung: **22.03.2023**
(21) Anmeldenummer: 18465620.5
(22) Anmeldetag: 20.11.2018
(51) Int. Cl.: F16K 11/07, F16K 11/044

(54) **STELLVENTIL**
CONTROL VALVE
VANNE DE RÉGULATION

(43) Veröffentlichungstag der Anmeldung: 27.05.2020
(73) Patentinhaber: Vitesco Technologies GmbH, 93055 Regensburg (DE)
(72) Erfinder: Petca, Eduard Cornel, 300693 Timisoara (RO)
(74) Vertreter: Vitesco Technologies

(56) Entgegenhaltungen:
- EP-A1- 1 334 853
- EP-A1- 2 700 853
- WO-A2-2011/081295
- CH-A- 160 831
- DE-A1- 1 550 387
- DE-A1- 1 750 092
- DE-A1-102007 057 878
- DE-A1-102015 122 379
- DE-B- 1 256 492
- FR-A1- 3 018 576
- JP-A- 2002 174 159
- US-A- 4 176 687

## Beschreibung

Die vorliegende Erfindung betrifft die Verwendung eines Stellventils in einem Kraftfahrzeug.

EP 1 334 853 A1 zeigt die Verwendung eines Stellventils in einem Kraftfahrzeug. Das Stellventil weist ein Gehäuse mit zumindest drei Öffnungen sowie zwei in einen Ventilschaft integrierten Verschlusselementen und zwei im Gehäuse integrierten Ventilsitzen auf. Diese Ventilsitze dienen als Lagerungen für den Ventilschaft.

Aufgabe der vorliegenden Erfindung ist es, ein Stellventil zu verbessern.

Diese Aufgabe wird durch die Verwendung des Stellvenitls in einem Kraftfahrzeug mit den Merkmalen des Anspruchs 1 gelöst.

Die Unteransprüche betreffen vorteilhafte Weiterbildungen.

Das Stellventil kann ein ein- oder mehrteiliges Gehäuse aufweisen, d. h. ein Gehäuse mit einem ein- oder mehrteiligen Gehäusegrundkörper und einem, in einer Ausführung axial(aufgesetzt)en, ein- oder mehrteiligen Verschluss.

Hierdurch kann in einer Ausführung die (De)Montage verbessert werden.

Das Gehäuse weist eine oder mehrere erste Offnungen und eine oder mehrere zweite Öffnungen auf. Das Gehäuse weist zudem eine oder mehrere weitere Öffnungen auf.

Die erste(n) Offnung(en) können einen bzw. mehrere (erste) Auslässe bilden, die zweite(n) Offnung(en) können einen bzw. mehrere Einlässe bilden und gegebenenfalls können die weitere (n) Öffnung(en) einen bzw. mehrere, in einer Ausführung von dem bzw. den ersten Auslässen verschiedene bzw. weitere, Auslässe bilden, bzw. sind hierzu vorgesehen, insbesondere eingerichtet, bzw. werden hierzu verwendet.

Hierdurch können selektiv ein oder mehrere verschiedene Auslässe von wenigstens einem Einlass beschickt werden.

Die erste (n) Öffnung (en) können einen bzw. mehrere (erste) Einlässe bilden, die zweite (n) Öffnung (en) können einen bzw. mehrere Auslässe und gegebenenfalls können die weitere(n) Öffnung (en) einen bzw. mehrere, in einer Ausführung von dem bzw. den ersten Einlässen verschiedene bzw. weitere, Einlässe bilden, bzw. sind hierzu vorgesehen, insbesondere eingerichtet, bzw. werden hierzu verwendet.

Nach einer Ausführung der vorliegenden Erfindung ist bzw. wird in dem Gehäuse zwischen der bzw. den ersten Öffnung (en) und der bzw. den zweiten Öffnung(en) ein ein- oder mehrteiliger erster Ventilsitz angeordnet, der eine oder mehrere Durchgangsöffnungen aufweist, über die in einer Ausführung die erste (n) und zweite (n) Öffnungen fluidtechnisch kommunizieren können. In einer Ausführung ist bzw. wird in dem Gehäuse zwischen der bzw. den weiteren Öffnung(en) und der bzw. den zweiten Öffnung(en) ein weiterer ein- oder mehrteiliger Ventilsitz angeordnet, der eine oder mehrere Durchgangsöffnungen aufweist, über die in einer Ausführung die weitere (n) und zweite (n) Öffnungen fluidtechnisch kommunizieren können. Durch mehrere Durchgangsöffnungen kann in einer Ausführung eine Durchströmung des (jeweiligen) Ventilsitzes bzw. des Stellventils verbessert werden.

Erfindungsgemäß weist das Stellventil einen ein- oder mehrteiligen Schaft auf, an dem ein erster Deckel angeordnet ist bzw. wird, wobei der Schaft in eine erste Schaftstellung, in der die bzw. eine oder mehrere, vorzugsweise alle, Durchgangsöffnung(en) des ersten Ventilsitzes durch den ersten Deckel verschlossen ist bzw. sind, und eine zweite Schaftstellung verstellbar ist, in der diese Durchgangsöffnung(en) des ersten Ventilsitzes nicht durch den ersten Deckel verschlossen ist bzw. sind bzw. der erste Deckel diese freigibt.

Erfindungsgemäß ist bzw. wird an dem Schaft ein weiterer Deckel angeordnet, wobei der Schaft in eine weitere Schaftstellung verstellbar ist, in der die bzw. eine oder mehrere, vorzugsweise alle, Durchgangsöffnung(en) des weiteren Ventilsitzes durch den weiteren Deckel verschlossen ist bzw. sind.

Erfindungsgemäß ist/sind bzw. wird/werden in dieser weiteren Schaftstellung die bzw. eine oder mehrere, vorzugsweise alle, Durchgangsöffnung(en) des ersten Ventilsitzes nicht durch den ersten Deckel verschlossen bzw. gibt der erste Deckel diese frei. Zusätzlich oder alternativ ist/sind bzw. wird/werden in der ersten Schaftstellung und/oder in der zweiten Schaftstellung die bzw. eine oder mehrere, vorzugsweise alle, Durchgangsöffnung (en) des weiteren Ventilsitzes nicht durch den weiteren Deckel verschlossen bzw. gibt der weitere Deckel diese frei.

Somit weist das Stellventil wenigstens drei Schaltstellungen auf:
- eine erste Schalt- bzw. Schaftstellung, in der die erste(n) Öffnung(en) verschlossen ist/sind und die zweite(n) Öffnung(en) mit der bzw. den weiteren Öffnung(en) kommuniziert/kommunizieren;
- eine zweite Schalt- bzw. Schaftstellung, in der die erste(n) und weiteren Öffnung(en) mit der bzw. den zweite(n) Öffnung(en) kommuniziert/kommunizieren; und
- eine weitere Schalt- bzw. Schaftstellung, in der die weitere(n) Öffnung(en) verschlossen ist/sind und die zweite(n) Öffnung (en) mit der bzw. den ersten Öffnung (en) kommuniziert/kommunizieren.

In einem nicht erfindungsgemäßen Ausführungsbeispiel weist das Gehäuse nur den ersten Ventilsitz und die erste (n) und zweite (n) Öffnung (en) bzw. keine weitere(n) Öffnung(en), insbesondere keinen weiteren Ventilsitz, bzw. nur zwei Schaltstellungen auf:
- eine erste Schalt- bzw. Schaftstellung, in der der bzw. alle Einlässe und der bzw. alle Auslässe voneinander getrennt bzw. gesperrt sind; und
- eine zweite Schalt- bzw. Schaftstellung, in der der bzw. alle Einlässe und der bzw. alle Auslässe miteinander kommunizieren bzw. geöffnet sind.

Erfindungsgemäß ist bzw. wird der Schaft in einem ersten Lager an dem ersten Ventilsitz linear beweglich, insbesondere verschiebbar, gelagert. Erfindungsgemäß ist bzw. wird der Schaft (zusätzlich) in einem weiteren Lager an dem weiteren Ventilsitz linear beweglich, insbesondere verschiebbar, gelagert.

Hierdurch können in einer Ausführung der bzw. die an dem Schaft angeordnete (n) Deckel zu dem (jeweiligen) Ventilsitz vorteilhaft zentriert und so insbesondere eine Abdichtung verbessert werden. In einer Ausführung weist das erste Lager eine integral an dem ersten Ventilsitz ausgebildete Gleitfläche auf. Zusätzlich oder alternativ weist in einer Ausführung das weitere Lager eine integral an dem weiteren Ventilsitz ausgebildete Gleitfläche auf. Mit anderen Worten ist bzw. wird in einer Ausführung das erste bzw. weitere Lager integral mit dem ersten bzw. weiteren Ventilsitz ausgebildet.

Hierdurch kann in einer Ausführung die Führung und so insbesondere die Abdichtung (weiter) verbessert werden.

In einer Ausführung weist das erste Lager eine an einem Ventilsitzkörper des ersten Ventilsitzes, in einer Ausführung form-, reib- und/oder stoffschlüssig, befestigte Gleitfläche, insbesondere eine Beschichtung oder Hülse, in einer Ausführung aus einem von dem Ventilsitzkörper verschiedenen Material, auf, auf der der Schaft gleitet bzw. die hierzu vorgesehen, insbesondere eingerichtet, ist bzw. verwendet wird. Zusätzlich oder alternativ weist in einer Ausführung das weitere Lager eine an einem Ventilsitzkörper des weiteren Ventilsitzes, in einer Ausführung form-, reib- und/oder stoffschlüssig, befestigte Gleitfläche, insbesondere eine Beschichtung oder Hülse, in einer Ausführung aus einem von diesem Ventilsitzkörper verschiedenen Material, auf, auf der der Schaft gleitet bzw. die hierzu vorgesehen, insbesondere eingerichtet, ist bzw. verwendet wird.

Hierdurch kann in einer Ausführung eine Abdichtung zwischen Schaft und Ventilsitz verbessert werden.

In einer Ausführung weist das Lager des ersten Ventilsitzes und/oder das Lager des weiteren Ventilsitzes Metall und/oder Kunststoff auf, es kann insbesondere hieraus bestehen.

Zusätzlich oder alternativ weist in einer Ausführung wenigstens ein deckelseitiger Abschnitt des ersten Ventilsitzes und/oder wenigstens ein deckelseitiger Abschnitt des weiteren Ventilsitzes und/oder wenigstens ein dem ersten Ventilsitz zugewandter Abschnitt des ersten Deckels und/oder wenigstens ein dem weiteren Ventilsitz zugewandter Abschnitt des weiteren Deckels und/oder wenigstens ein in dem ersten und/oder weiteren Lager gelagerter Abschnitt des Schaftes Metall und/oder Kunststoff auf, kann insbesondere hieraus bestehen.

Durch Metall kann in einer Ausführung die Wärmefestigkeit verbessert werden, durch Kunststoff in einer Ausführung die Abdichtung.

In einer Ausführung ist das Lager des ersten Ventilsitzes und/oder das Lager des weiteren Ventilsitzes an, insbesondere (radial) zwischen, zwei oder mehr Radialspeichen angeordnet, die die bzw. eine oder mehrere Durchgangsöffnung(en) dieses Ventilsitzes begrenzen.

Zusätzlich oder alternativ ist in einer Ausführung wenigstens ein deckelseitiger Abschnitt des ersten Ventilsitzes und/oder wenigstens ein deckelseitiger Abschnitt des weiteren Ventilsitzes und/oder wenigstens ein dem ersten Ventilsitz zugewandter Abschnitt des ersten Deckels und/oder wenigstens ein dem weiteren Ventilsitz zugewandter Abschnitt des weiteren Deckels und/oder wenigstens ein in dem ersten und/oder weiteren Lager gelagerter Abschnitt des Schaftes rotationssymmetrisch (ausgebildet). Zusätzlich oder alternativ umgreift in einer Ausführung in der ersten Schaftstellung ein Bund des ersten Deckels den ersten Ventilsitz oder ein Bund des ersten Ventilsitzes den ersten Deckel radial (von) außen. Zusätzlich oder alternativ umgreift in einer Ausführung in der weiteren Schaftstellung ein Bund des weiteren Deckels den weiteren Ventilsitz oder ein Bund des weiteren Ventilsitzes den weiteren Deckel radial (von) außen.

Hierdurch können in einer Ausführung jeweils, insbesondere in Kombination, der bzw. die an dem Schaft angeordnete (n) Deckel zu dem (jeweiligen) Ventilsitz bzw. dessen Durchgangsöffnung(en) (noch) vorteilhaft(er) zentriert und so insbesondere eine Abdichtung (weiter) verbessert werden.

In einer nicht erfindungsgemäßen Ausführung wird bzw. ist der erste Ventilsitz und/oder der weitere Ventilsitz integral an dem Gehäuse ausgebildet. Zusätzlich oder alternativ wird bzw. ist in einer nicht erfindungsgemäßen Ausführung der erste Deckel und/oder der weitere Deckel integral an dem Schaft ausgebildet.

Hierdurch könnte die Dichtheit verbessert werden.

In einer Ausführung wird bzw. ist der erste Ventilsitz und/oder der weitere Ventilsitz, insbesondere form-, reib- und/oder stoffschlüssig, an dem Gehäuse befestigt, in einer Ausführung mittels Presspassung bzw. -sitz. Erfindungsgemäß wird bzw. ist in einer Ausführung der erste Deckel und/oder der weitere Deckel, insbesondere form-, reib- und/oder stoffschlüssig, an dem Schaft befestigt, in einer Ausführung mittels Schweißen, Löten und/oder Kleben.

Hierdurch kann in einer Ausführung die Montage verbessert werden. In einer Ausführung weist das Stellventil einen, in einer Ausführung elektrischen, Antrieb, auf, durch den der Schaft in die Schaftstellungen verstellt wird bzw. der hierzu vorgesehen, insbesondere eingerichtet ist bzw. verwendet wird. Der Antrieb weist in einer Ausführung einen Elektromotor und/oder ein Getriebe auf.

Insbesondere kann das Stellventil in Kraftfahrzeugen zum selektiven Sperren einer Abgas-, insbesondere Abgasrückführ-, oder Fluid-, insbesondere Kühlfluidleitung verwendet werden.

Eine Axialrichtung ist in einer Ausführung parallel zu einer Längsachse bzw. Verschieberichtung des Schaftes, eine Umfangsrichtung eine Umlaufrichtung um diese Längsachse, eine Radialrichtung senkrecht auf Axial- und Umfangsrichtung. Weitere Vorteile und Merkmale ergeben sich aus den Unteransprüchen und den Ausführungsbeispielen. Hierzu zeigt, teilweise schematisiert:
- Fig. 1:: einen Meridianschnitt eines Stellventils, zur erfindungssgemäßen Verwendung, in einer ersten Schalt- bzw. Schaftstellung;
- Fig. 2:: das Stellventil, zur erfindungssgemäßen Verwendung, in einer weiteren Schalt- bzw. Schaftstellung; und

- Fig. 3:: einen Ventilsitz des Stellventils, zur erfindungssgemäßen Verwendung, in axialer Draufsicht.

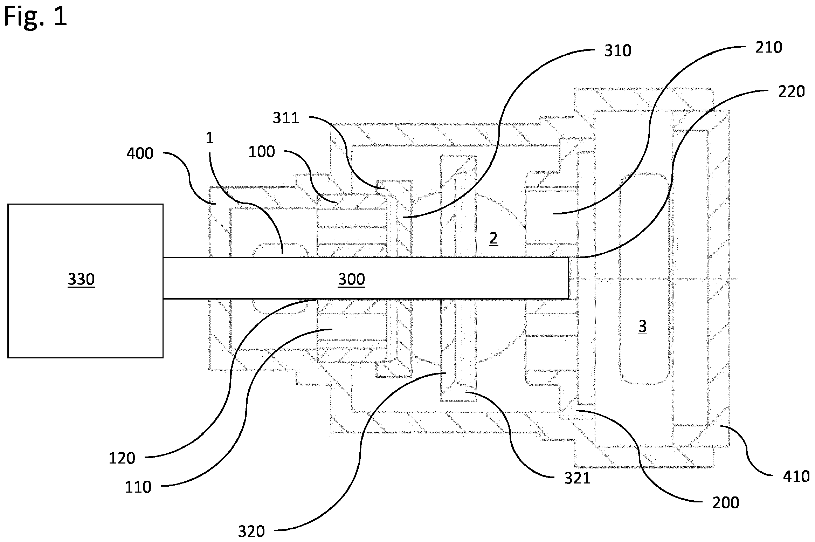

Fig. 1 zeigt ein Stellventil, zur erfindungssgemäßen Verwendung, in einem Meridianschnitt in einer ersten Schalt- bzw. Schaftstellung.

Das Stellventil weist ein zweiteiliges Gehäuse mit einem Gehäusegrundkörper 400 und einem axial aufgesetzten Verschluss 410 auf, das eine erste Öffnung 1, eine zweite Öffnung 2 und eine weitere Öffnung 3 aufweist.

In dem Gehäuse ist zwischen der ersten und zweiten Öffnung 1, 2 ein erster Ventilsitz(körper) 100 und zwischen der weiteren und der zweiten Öffnung 2, 3 ein weiterer Ventilsitz(körper) 200 angeordnet, die jeweils mehrere Durchgangsöffnungen 110 bzw. 210 aufweisen.

Das Stellventil weist einen Schaft 300 auf, an dem ein erster Deckel 310 und ein weiterer Deckel 320 angeordnet sind.

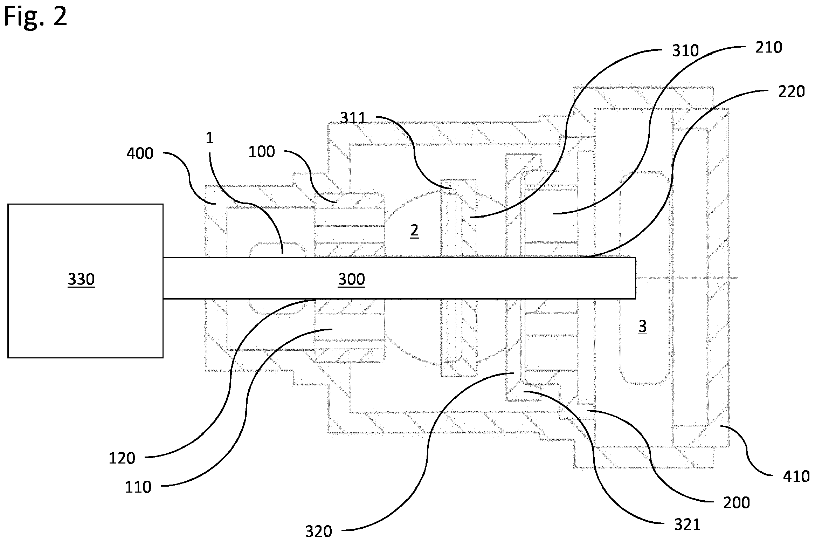

Dieser Schaft 300 ist in einem ersten Lager 120 an dem ersten Ventilsitz 100 und einem weiteren Lager 220 an dem weiteren Ventilsitz 200 linear beweglich gelagert, so dass er in eine in Fig. 1 gezeigte erste Schaftstellung, in der die Durchgangsöffnungen 110 des ersten Ventilsitzes 100 durch den ersten Deckel 310 verschlossen, aber die Durchgangsöffnungen 210 des weiteren Ventilsitzes 200 nicht durch den weiteren Deckel 320 verschlossen sind, eine in Fig. 2 gezeigte weitere Schaftstellung, in der die Durchgangsöffnungen 210 des weiteren Ventilsitzes 200 durch den weiteren Deckel 320 verschlossen, aber die Durchgangsöffnungen 110 des ersten Ventilsitzes 100 nicht durch den ersten Deckel 310 verschlossen sind, und eine zweite Schaftstellung (nicht dargestellt) verstellbar ist, die zwischen der ersten und weiteren Schaftstellung liegt und in der weder die Durchgangsöffnungen 110 des ersten Ventilsitzes 100 durch den ersten Deckel 310 noch die Durchgangsöffnungen 210 des weiteren Ventilsitzes 200 durch den weiteren Deckel 320 verschlossen sind.

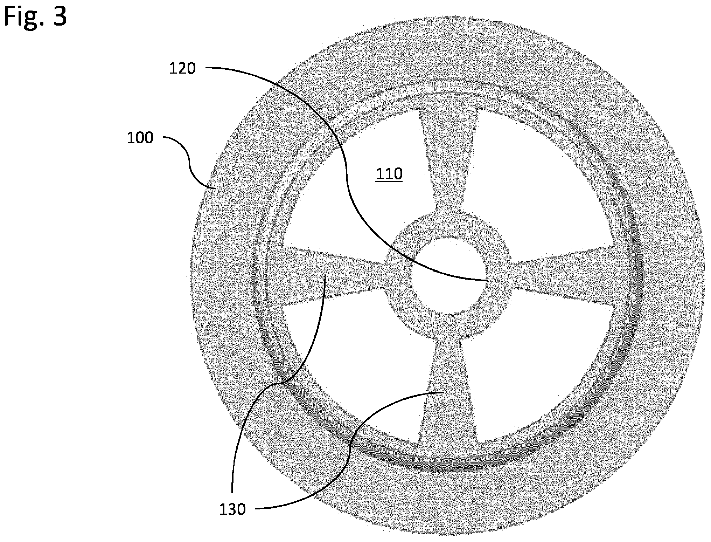

Wie in Fig. 3 erkennbar, in der der erste Ventilsitz 100 des Stellventils in axialer Draufsicht gezeigt ist, ist dessen Lager 120 zwischen mehreren Radialspeichen 130 angeordnet, die die Durchgangsöffnungen 110 dieses Ventilsitzes begrenzen. Der zweite Ventilsitz 200 ist analog aufgebaut.

Mit 330 ist ein Antrieb zum linearen Verstellen des Schaftes 300 in die Schaftstellungen angedeutet.

In der ersten Schaftstellung (vgl. Fig. 1) umgreift ein Bund 311 des ersten Deckels 310 den ersten Ventilsitz 100 radial außen, in der weiteren Schaftstellung (vgl. Fig. 2) ein Bund 321 des weiteren Deckels 320 den weiteren Ventilsitz 200.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: erste Öffnung
- 2: zweite Öffnung
- 3: weitere Öffnung
- 100: erster Ventilsitz(körper)
- 110: Durchgangsöffnung
- 120: Lager
- 130: Radialspeiche
- 200: zweiter Ventilsitz(körper)
- 210: Durchgangsöffnung
- 220: Lager
- 300: Schaft
- 310: erster Deckel
- 311: Bund
- 320: zweiter Deckel
- 321: Bund
- 330: Antrieb
- 400: Gehäusegrundkörper
- 410: Gehäuseverschluss

## Patentansprüche

1. Verwendung eines Stellventils in einem Kraftfahrzeug, wobei das Stellventil ein Gehäuse (400, 410), das wenigstens eine erste Öffnung (1), wenigstens eine zweite Öffnung (2) und wenigstens eine weitere Öffnung (3) aufweist, einen in dem Gehäuse zwischen der ersten und zweiten Öffnung angeordneten ersten Ventilsitz (100), einen in dem Gehäuse zwischen der weiteren und der zweiten Öffnung angeordneten weiteren Ventilsitz (200) und einen Schaft (300), an dem ein erster Deckel (310) und ein weiterer Deckel (320) angeordnet ist, aufweist, wobei der Schaft in eine erste Schaftstellung, in der wenigstens eine Durchgangsöffnung (110) des ersten Ventilsitzes durch den ersten Deckel verschlossen ist, in eine zweite Schaftstellung, in der diese Durchgangsöffnung des ersten Ventilsitzes nicht durch den ersten Deckel verschlossen ist, und in eine weitere Schaftstellung, in der wenigstens eine Durchgangsöffnung (210) des weiteren Ventilsitzes durch den weiteren Deckel verschlossen ist, verstellbar ist, wobei der Schaft in einem ersten Lager (120) an dem ersten Ventilsitz und in einem weiteren Lager (220) an dem weiteren Ventilsitz linear beweglich gelagert ist und der erste Deckel an dem Schaft, insbesondere form-, reib- und/oder stoffschlüssig, befestigt ist, wobei der erste und weitere Ventilsitz, insbesondere form-, reib- und/oder stoffschlüssig, an dem Gehäuse befestigt sind.

2. Verwendung eines Stellventils nach dem vorhergehenden Anspruch, **dadurch gekennzeichnet, dass**
- in der weiteren Schaftstellung die Durchgangsöffnung des ersten Ventilsitzes nicht durch den ersten Deckel verschlossen ist; und/oder
- in der ersten und/oder zweiten Schaftstellung die Durchgangsöffnung des weiteren Ventilsitzes nicht durch den weiteren Deckel verschlossen ist.

3. Verwendung eines Stellventils nach einem der vorhergehenden Ansprüche, **dadurch gekennzeichnet, dass** das erste Lager eine integral an dem ersten Ventilsitz ausgebildete oder an dessen Ventilsitzkörper (100) befestigte Gleitfläche, insbesondere Beschichtung oder Hülse, aufweist und/oder dass das weitere Lager eine integral an dem weiteren Ventilsitz ausgebildete oder an dessen Ventilsitzkörper (200) befestigte Gleitfläche, insbesondere Beschichtung oder Hülse, aufweist, auf der der Schaft gleitet.

4. Verwendung eines Stellventils nach einem der vorhergehenden Ansprüche, **dadurch gekennzeichnet, dass** das Lager des ersten und/oder weiteren Ventilsitzes Metall und/oder Kunststoff aufweist und/oder an, insbesondere zwischen, wenigstens zwei Radialspeichen (130) angeordnet ist, die die Durchgangsöffnung dieses Ventilsitzes begrenzen.

5. Verwendung eines Stellventils nach einem der vorhergehenden Ansprüche, **gekennzeichnet durch** einen Antrieb (330) zum linearen Verstellen des Schaftes in die Schaftstellungen.

6. Verwendung eines Stellventils nach einem der vorhergehenden Ansprüche, **dadurch gekennzeichnet, dass** wenigstens ein deckelseitiger Abschnitt des ersten und/oder weiteren Ventilsitzes und/oder wenigstens ein dem ersten Ventilsitz zugewandter Abschnitt des ersten Deckels und/oder wenigstens ein dem weiteren Ventilsitz zugewandter Abschnitt des weiteren Deckels und/oder wenigstens ein in dem ersten und/oder weiteren Lager gelagerter Abschnitt des Schaftes rotationssymmetrisch ausgebildet ist und/oder Metall und/oder Kunststoff aufweist.

7. Verwendung eines Stellventils nach einem der vorhergehenden Ansprüche, **dadurch gekennzeichnet, dass** in der ersten Schaftstellung ein Bund (311) des ersten Deckels den ersten Ventilsitz oder ein Bund (321) des ersten Ventilsitzes den ersten Deckel radial außen umgreift und/oder in der weiteren Schaftstellung ein Bund des weiteren Deckels (321) den weiteren Ventilsitz oder ein Bund des weiteren Ventilsitzes den weiteren Deckel radial außen umgreift.

8. Verwendung eines Stellventils nach einem der vorhergehenden Ansprüche, **dadurch gekennzeichnet, dass** der weitere Deckel integral an dem Schaft ausgebildet oder, insbesondere form-, reib- und/oder stoffschlüssig, an diesem befestigt ist.

## Claims

1. Use of a control valve in a motor vehicle, wherein the control valve has a housing (400, 410), which has at least one first opening (1), at least one second opening (2) and at least one further opening (3), a first valve seat (100), which is arranged in the housing between the first and second openings, a further valve seat (200), which is arranged in the housing between the further and the second opening, and a shank (300), on which a first cover (310) and a further cover (320) are arranged, wherein the shank is adjustable into a first shank position, in which at least one passage opening (110) of the first valve seat is closed off by the first cover, into a second shank position, in which said passage opening of the first valve seat is not closed off by the first cover, and into a further shank position, in which at least one passage opening (210) of the further valve seat is closed off by the further cover, wherein the shank is mounted in linearly movable manner in a first bearing (120) at the first valve seat and in a further bearing (220) at the further valve seat, and the first cover is fastened to the shank, in particular in a positively locking, frictionally locking and/or cohesive manner, wherein the first and further valve seats are fastened to the housing, in particular in a positively locking, frictionally locking and/or cohesive manner.

2. Use of a control valve according to the preceding claim, **characterized in that**
- in the further shank position, the passage opening of the first valve seat is not closed off by the first cover; and/or
- in the first and/or second shank position, the passage opening of the further valve seat is not closed off by the further cover.

3. Use of a control valve according to either of the preceding claims, **characterized in that** the first bearing has a sliding surface, in particular a coating or sleeve, which is formed integrally on the first valve seat or fastened to the valve seat body (100) thereof, and/or **in that** the further bearing has a sliding surface, in particular coating or sleeve, which is formed integrally on the further valve seat or fastened to the valve seat body (200) thereof, and on which the shank slides.

4. Use of a control valve according to any of the preceding claims, **characterized in that** the bearing of the first and/or further valve seat has metal and/or plastic and/or is arranged at, in particular between, at least two radial spokes (130) that delimit the passage opening of said valve seat.

5. Use of a control valve according to any of the preceding claims, **characterized by** a drive (330) for the linear adjustment of the shank into the shank positions.

6. Use of a control valve according to any of the preceding claims, **characterized in that** at least one cover-side portion of the first and/or further valve seat and/or at least one portion, facing the first valve seat, of the first cover and/or at least one portion, facing the further valve seat, of the further cover and/or at least one portion, mounted in the first and/or further bearing, of the shank is rotationally symmetric and/or has metal and/or plastic.

7. Use of a control valve according to any of the preceding claims, **characterized in that**, in the first shank position, a collar (311) of the first cover engages radially on the outside around the first valve seat or a collar (321) of the first valve seat engages radially on the outside around the first cover, and/or, in the further shank position, a collar of the further cover (321) engages radially on the outside around the further valve seat or a collar of the further valve seat engages radially on the outside around the further cover.

8. Use of a control valve according to any of the preceding claims, **characterized in that** the further valve seat is formed integrally on the shank or is fastened thereto, in particular in a positively locking, frictionally locking and/or cohesive manner.

## Revendications

1. Utilisation d'une soupape de régulation dans un véhicule automobile ;
la soupape de régulation comportant un carter (400, 410), l'au moins une première ouverture (1), au moins une deuxième ouverture (2) et au moins une ouverture (3) supplémentaire, un premier siège de soupape (100) disposé dans le carter entre la première et la deuxième ouverture, un siège de soupape (200) supplémentaire disposé dans le carter entre l'ouverture supplémentaire et la deuxième ouverture et une tige (300) au niveau de laquelle un premier cache (310) et un cache (320) supplémentaire est disposé, la tige pouvant être déplacée dans une première position de tige dans laquelle au moins une ouverture traversante (110) du premier siège de soupape est fermée par le premier cache, dans une deuxième position de tige dans laquelle l'ouverture traversante du premier siège de soupape n'est pas fermée par le premier cache et dans une position de tige supplémentaire dans laquelle au moins une ouverture traversante (210) du siège de soupape supplémentaire est fermée par le cache supplémentaire, la tige étant disposée de façon à pouvoir être déplacée de façon linéaire dans un premier palier de roulement (120) au niveau du premier siège de soupape et dans un palier de roulement supplémentaire (220) au niveau du siège de soupape supplémentaire et le premier cache étant fixé au niveau de la tige, notamment par complémentarité de formes, de frottements et/ou de matières, le premier siège de soupape et le siège de soupape supplémentaire étant fixés au carter, notamment par complémentarité de formes, frottements et/ou matières.

2. Utilisation d'une soupape de régulation selon la revendication précédente, **caractérisée en ce que** :
- dans la position de tige supplémentaire, l'ouverture traversante du premier siège de soupape n'est pas fermée par le premier cache ; et/ou
- dans la première et/ou deuxième position de tige, l'ouverture traversante du siège de soupape supplémentaire n'est pas fermée par le cache supplémentaire.

3. Utilisation d'une soupape de régulation selon l'une quelconque des revendications précédentes, **caractérisée en ce que** le premier palier de roulement comporte une surface de glissement, notamment un revêtement ou une douille, intégralement réalisé au niveau du premier siège de soupape ou fixé au niveau de son corps de siège de soupape (100) et/ou que le palier de roulement supplémentaire sur lequel la tige glisse, notamment un revêtement ou une douille, comporte une surface de glissement intégralement réalisée au niveau du siège de soupape supplémentaire ou fixée à son corps de siège de soupape (200).

4. Utilisation d'une soupape de régulation selon l'une quelconque des revendications précédentes, **caractérisée en ce que** le palier de roulement du premier siège de soupape et/ou du siège de soupape supplémentaire comporte du métal et/ou ou de la matière plastique et/ou est disposé au niveau d'au moins deux rayons de roue radiaux (130), notamment entre eux, ceux-ci délimitant l'ouverture traversante de ce siège de soupape.

5. Utilisation d'une soupape de régulation selon l'une quelconque des revendications précédentes, **caractérisée par** la présence d'un entraînement (330) servant à régler de façon linéaire la tige dans les positions de tige.

6. Utilisation d'une soupape de régulation selon l'une quelconque des revendications précédentes, **caractérisée en ce qu'**au moins une section de côté de cache du premier siège de soupape et/ou du siège de soupape supplémentaire et/ou au moins une section du premier cache orientée vers le premier siège de soupape et/ou au moins une section orientée vers le siège de soupape supplémentaire du cache supplémentaire et/ou au moins une section disposée dans le premier palier de roulement et/ou dans le palier de roulement supplémentaire de la tige est réalisée de façon symétrique en rotation et/ou comporte du métal et/ou de la matière plastique.

7. Utilisation d'une soupape de régulation selon l'une quelconque des revendications précédentes, **caractérisée en ce que** dans la première position de tige, une attache (311) du premier cache enserre de l'extérieur dans le plan radial le premier siège de soupape ou qu'une attache (321) du premier siège de soupape enserre de l'extérieur dans le plan radial le premier cache et/ou que dans la position de tige supplémentaire, une attache du cache supplémentaire (321) enserre de l'extérieur dans le plan radial le siège de soupape supplémentaire ou qu'une attache de siège de soupape supplémentaire enserre de l'extérieur dans le plan radial le cache supplémentaire.

8. Utilisation d'une soupape de régulation selon l'une quelconque des revendications précédentes, **caractérisée en ce que** le cache supplémentaire est intégralement réalisé au niveau de la tige ou est fixé à celle-ci, notamment par complémentarité de formes, de frottements et/ou de matières.
